(19) **Europäisches Patentamt European Patent Office Office européen des brevets**

(11) **EP 3 670 573 B1**

(12) **FASCICULE DE BREVET EUROPEEN**

(45) Date de publication et mention de la délivrance du brevet:
**18.06.2025 Bulletin 2025/25**

(21) Numéro de dépôt: **19218816.7**

(22) Date de dépôt: **20.12.2019**

(51) Classification Internationale des Brevets (IPC):
**C08G 65/36** *(2006.01)*    **B22C 1/20** *(2006.01)*
**C03C 25/24** *(2018.01)*    **C08J 3/05** *(2006.01)*
**C08J 5/24** *(2006.01)*    **C09J 105/00** *(2006.01)*
**C08L 71/00** *(2006.01)*

(52) Classification Coopérative des Brevets (CPC):
(C-Sets disponibles)
**C08G 65/36; C03C 25/25; C03C 25/26;
C09J 171/14**                                    (Cont.)

(54) **COMPOSITION D'ENCOLLAGE A BASE DE RESINE FURANIQUE, DE SUCRE REDUCTEUR ET/ OU DE SUCRE NON REDUCTEUR**

KLEBEZUSAMMENSETZUNG AUF DER BASIS VON FURANHARZ, REDUKTIONSZUCKER UND/ ODER NICHT REDUZIERENDEM ZUCKER

COMPOSITION FOR GLUING MADE OF FURAN RESIN, REDUCING SUGAR AND/OR NON-REDUCING SUGAR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:   **20.12.2018   FR 1873698**

(43) Date de publication de la demande:
**24.06.2020   Bulletin 2020/26**

(73) Titulaire: **SAINT-GOBAIN ISOVER
92400 Courbevoie (FR)**

(72) Inventeurs:
• **SALOMON, Pierre M.
92400 Courbevoie (FR)**
• **MILLEREAU, Pierre M.
75018 Paris (FR)**
• **OBERT, Edouard M.
60700 Fleurines (FR)**

(74) Mandataire: **Saint-Gobain Recherche
41 Quai Lucien Lefranc
93300 Aubervilliers (FR)**

(56) Documents cités:
**WO-A1-2018/167429      CN-A- 102 728 783
FR-A1- 3 019 815      FR-A5- 2 109 292**

(52) Classification Coopérative des Brevets (CPC):
(Cont.)

C-Sets
**C09J 171/14, C08K 5/04;**
**C09J 171/14, C08K 5/04, C08K 7/14;**
**C09J 171/14, C08K 5/053;**
**C09J 171/14, C08K 5/1545**

**EP 3 670 573 B1**

**Description**

La présente invention se rapporte au domaine des encollages pour des produits d'isolation thermique et/ou acoustique à base de laine minérale, notamment de verre ou de roche, et d'un liant organique exempt de formaldéhyde.

L'invention concerne plus particulièrement une composition d'encollage apte à réticuler pour former ledit liant organique, qui renferme une solution aqueuse de résine furanique et de sucre réducteur et/ou de sucre non réducteur. Elle concerne également un procédé de fabrication de produits d'isolation à base de fibres minérales ou organiques liées par un liant utilisant la composition d'encollage précitée, ainsi que les produits isolants obtenus par un tel procédé.

La fabrication de produits d'isolation à base de laine minérale comprend généralement une étape de fabrication de la laine elle-même, qui peut être mise en œuvre par différents procédés, par exemple selon la technique connue du fibrage par centrifugation interne ou externe.

La centrifugation interne, plus communément employée pour fabriquer de la laine de verre, consiste à introduire la matière minérale en fusion dans un dispositif centrifuge comprenant une multitude de petits orifices, la matière étant projetée vers la paroi périphérique du dispositif sous l'action de la force centrifuge et s'en échappant sous la forme de filaments. A la sortie du dispositif centrifuge, les filaments sont étirés et entraînés vers un organe récepteur par un courant gazeux ayant une température et une vitesse élevées, pour y former une nappe de fibres (ou laine minérale).

La centrifugation externe consiste, quant à elle, à déverser la matière en fusion à la surface périphérique externe d'organes rotatifs appelés rotors, d'où la matière en fusion est éjectée sous l'action de la force centrifuge. Des moyens d'étirage par courant gazeux et de collecte sur un organe de réception sont également prévus.

Pour assurer l'assemblage des fibres entre elles et permettre à la nappe d'avoir de la cohésion, on projette sur les fibres, sur le trajet allant de la sortie du dispositif centrifuge vers l'organe récepteur, une composition d'encollage contenant une résine thermodurcissable. La nappe de fibres revêtues de l'encollage est soumise à un traitement thermique, à une température généralement supérieure à 100°C, afin d'effectuer la réticulation de la résine et obtenir ainsi un produit d'isolation thermique et/ou acoustique ayant des propriétés spécifiques, notamment une stabilité dimensionnelle, une résistance à la traction, une reprise d'épaisseur après compression et une couleur homogène.

La composition d'encollage à projeter sur la laine minérale se présente généralement sous la forme d'une solution aqueuse renfermant la résine thermodurcissable et des additifs tels qu'un catalyseur de réticulation de la résine, un silane promoteur d'adhérence, une huile minérale anti-poussières, ... La composition d'encollage est le plus souvent appliquée sur les fibres par pulvérisation.

Les propriétés de la composition d'encollage dépendent en grande partie des caractéristiques de la résine. Du point de vue de l'application, il est nécessaire que la composition d'encollage présente une bonne aptitude à la pulvérisation et puisse se déposer à la surface des fibres afin de les lier efficacement.

La résine doit être stable pendant un laps de temps donné avant d'être utilisée pour former la composition d'encollage, laquelle composition est généralement préparée au moment de l'emploi en mélangeant la résine et les additifs mentionnés précédemment.

Sur le plan réglementaire, il est nécessaire que la résine ne soit pas nocive, c'est-à-dire qu'elle contienne - et qu'elle génère lors de l'étape d'encollage ou ultérieurement - le moins possible de composés pouvant nuire à la santé humaine ou à l'environnement.

Les résines thermodurcissables les plus couramment utilisées pour la fabrication de produits d'isolation à base de laine minérales sont des résines à base de formaldéhyde (urée-formaldéhyde, phénol-formaldéhyde, mélamine-formaldéhyde). Ces résines sont peu coûteuses, solubles dans l'eau et aptes à réticuler dans les conditions thermiques susmentionnées. Toutefois, elles peuvent encore contenir une certaine proportion de formaldéhyde libre dont les effets nocifs sont avérés par les études toxicologiques. Ces résines font alors l'objet d'un traitement par l'urée pour fixer ce formaldéhyde libre sous la forme de condensats non volatils. Or, ces condensats sont instables dans les conditions de températures auxquelles les nappes de fibres de verre sont soumises. Ils peuvent se décomposer en formaldéhyde et en ammoniaque (lui-même produit de la dégradation de l'urée) qui sont libérés dans l'atmosphère de traitement et doivent alors faire l'objet de procédures de captation pour réduire leur impact sur l'environnement. Des solutions de remplacement des résines à base de formaldéhyde dans les compositions d'encollage ont donc été développées, comme dans la demande FR 3 019 815 A1, dans laquelle il est décrit des compositions d'encollages à base de saccharides non-réducteurs et de saccharides hydrogénés.

Des résines « furaniques » ou « polyfuraniques » issues de la biomasse d'origine végétale sont une des solutions utilisées. Ces résines furaniques initialement connues en fonderie pour assurer la prise dans le moule des sables de moulage, sont utilisées de manière classique en tant que liants pour fibres minérales pour la fabrication de produits d'isolation à base de laine minérale (voir par exemple WO 93/25490, WO 94/26676, WO 94/26677, WO 94/26798). Les résines furaniques décrites dans ces documents sont des mélanges de monomères, oligomères et polymères obtenus par polycondensation en milieu acide de monomères à noyau « furane » et éventuellement d'autres comonomères tels que des anhydrides, aldéhydes, cétones, urée, phénol etc.

Deux résines furaniques sont décrites plus en détail notamment dans WO 94/26677 comme étant des produits du commerce, à savoir les produits

- Farez™ M (QO Chemicals), une résine d'alcool furfurylique et de formaldéhyde-urée contenant 6% d'alcool furfurylique résiduel et également de 0,4 à 1,1% de formaldéhyde, et
- Quacorr™ 1300 (QO Chemicals), une résine obtenue par polycondensation d'alcool furfurylique ayant une teneur résiduelle en alcool furfurylique comprise entre 2% et 18%.

Une autre résine furanique disponible sur le marché est la résine BioRez™ (TransFurans Chemicals, Belgique) obtenue par polycondensation d'alcool furfurylique en présence d'un catalyseur acide. Elle présente un pH acide entre environ 4,5 et 5,5, une faible teneur en alcool furfurylique (inférieure à 1% de la composition aqueuse commercialisée) et une viscosité à 25 °C inférieure à 1000 mPa.s à 75% d'extrait sec. Cette résine présente une faible teneur résiduelle en alcool furfurylique, mais un catalyseur acide reste nécessaire pour activer sa polycondensation.

Dans la demande WO 2018/167429 A1, il est décrit une solution concentrée de poly(alcool furfurylique) pour encollage de fibres organiques ou minérales, stable au stockage.

Cependant, toutes ces résines à base de résine furanique sont coûteuses, rendant ainsi les compositions d'encollages projetées sur les fibres et contenant ces résines très coûteuses.

La Demanderesse a donc cherché une composition d'encollage bio-sourcée, peu nocive, qui soit peu coûteuse, tout en conservant de bonnes propriétés mécaniques et une bonne aptitude à réticuler.

L'idée à la base de la présente invention est de remplacer une partie des résines furaniques par un composé moins coûteux dans les compositions d'encollages connues. Il s'est avéré que 5% à 60% en poids d'au moins un sucre réducteur et/ou d'au moins un sucre non réducteur dans une composition d'encollage comprenant de 40% à 95% en poids de résine furanique, par rapport au poids total sec de la composition, permettait de réduire les coûts de ladite composition d'encollage tout en conservant de bonnes propriétés mécaniques et une bonne aptitude à réticuler.

En effet, il a été constaté de manière surprenante par les inventeurs qu'au moins un sucre choisi parmi les sucres réducteurs, les sucres non réducteurs, et les mélanges de ceux-ci, et ce dans la proportion indiquée ci-dessus, réagissait avec la résine furanique, contrairement à d'autres composés tel qu'un sucre hydrogéné.

De plus, la Demanderesse a constaté que la présence d'un acide et/ou d'une base n'était pas nécessaire dans une composition d'encollage telle que définie ci-dessus, pour former le réseau polymérique qui constitue le liant final. La composition d'encollage selon la présente invention présente l'avantage de réticuler, même en l'absence d'acide et/ou de base.

Ainsi la présente demande a plus précisément pour objet une composition aqueuse d'encollage pour des fibres minérales ou organiques comprenant :

- de 40% à 95% en poids de résine furanique, et
- de 5% à 60% en poids d'au moins un sucre réducteur et/ou d'au moins un sucre non réducteur,

ladite composition d'encollage présentant une teneur en matières sèches comprise entre 0,5% et 50% en poids.

De préférence, la composition d'encollage comprend de 10% à 50% en poids d'au moins un sucre réducteur et/ou d'au moins un sucre non réducteur et de préférence de 20% à 40% en poids, et plus préférentiellement de 20% à 30% par rapport au poids total sec de la composition.

De préférence, la composition d'encollage comprend de 50% à 90% en poids de résine furanique et de préférence de 60% à 80% en poids, et plus préférentiellement de 70% à 80% par rapport au poids total sec de la composition.

Les résines furaniques selon l'invention sont bien connues comme liant pour des fibres de verre et sont décrites dans les demandes de brevet précitées : WO 93/25490, WO 94/26676, WO 94/26677, WO 94/26798. Selon un mode préféré de l'invention, la résine furanique est une résine d'alcool furfurylique, appelée poly(alcool furfurylique). Le poly(alcool furfurylique) désigne un produit d'auto-condensation de l'alcool furfurylique se présentant sous forme d'oligomères comportant au moins deux motifs furaniques, le cas échéant d'un mélange d'oligomères de poids moléculaire variable. Lorsque la résine furanique est un poly(alcool furfurylique), la teneur résiduelle en alcool furfurylique monomère de la composition d'encollage selon l'invention est de préférence la plus faible possible. L'alcool furfurylique (numéro CAS 98-00-0) est en effet un composé organique volatil (COV) considéré comme nocif par contact cutané, inhalation et par ingestion. La volatilité, inflammabilité et toxicité de l'alcool furfurylique impose des précautions d'emploi. Ainsi, la composition d'encollage de la présente invention peut contenir moins de 1,5% en poids, plus préférentiellement moins de 1,0% en poids et idéalement moins de 0,1% en poids d'alcool furfurylique.

Le sucre réducteur de la composition d'encollage conforme à la présente invention est un monosaccharide, un oligosaccharide, un polysaccharide ou un mélange de ces composés.

A titre d'exemple de monosaccharide, on peut citer le glucose, le galactose, le mannose et le fructose.

Par « oligosaccharide » on entend un saccharide renfermant 2 à 10 motifs d'oses, de préférence au plus 5.

A titre d'exemple d'oligosaccharide, on peut citer le lactose, le maltose, l'isomaltose et le cellobiose.

Les polysaccharides conformes à l'invention sont choisis parmi les polysaccharides ayant une masse molaire moyenne en nombre inférieure à 100000, de préférence inférieure à 50000 et avantageusement inférieure à 10000.

A titre d'exemple de polysaccharide préféré, on peut citer les dextrines. Les dextrines sont des composés répondant à la formule générale $(C_6H_{10}O_5)_n$ obtenus par hydrolyse partielle d'amidon. Les procédés de préparation des dextrines sont connus. Par exemple, les dextrines peuvent être préparées en chauffant ou en séchant à sec un amidon, généralement en présence d'un catalyseur acide, ce qui conduit à la rupture des molécules d'amylose et d'amylopectine qui constituent ledit amidon en produits de masse molaire plus faible. Les dextrines peuvent aussi être obtenues en traitant l'amidon par voie enzymatique avec une ou plusieurs amylases, notamment microbiennes, aptes à hydrolyser les liaisons de l'amidon. La nature du traitement (chimique ou enzymatique) et les conditions d'hydrolyse ont une incidence directe sur la masse molaire moyenne et la distribution des masses molaires de la dextrine.

Les dextrines selon la présente invention présentent un équivalent en dextrose DE (« Dextrose Equivalent » en anglais) supérieur à 5, de préférence supérieur à 30, et plus préférentiellement supérieur à 50.

De manière conventionnelle, l'équivalent en dextrose DE est défini par la relation suivante :

[Math. 1]

$$DE = 100 \times \left( \frac{\text{nombre de liaisons glycosidiques rompues}}{\text{nombre de liaisons glycosidiques dans l'amidon initial}} \right)$$

Les dextrines conformes à l'invention peuvent être obtenues à partir d'amidon ou de dérivés d'amidon d'origine végétale variée, par exemple issues de tubercules tels que la pomme de terre, le manioc, le maranta et la patate douce, issues de graines telles que le blé, le maïs, le seigle, le riz, l'orge, le millet, l'avoine et le sorgho, issues de fruits tels que le marron, la châtaigne, et la noisette, ou issues de légumineuses telles que le pois et le haricot.

De préférence, le sucre réducteur est choisi parmi le glucose, les polysaccharides composés majoritairement (c'est-à-dire à plus de 50 % en poids) de motifs de glucose et les mélanges de ces composés.

De préférence, le sucre réducteur est le glucose ou le maltose, et avantageusement le glucose.

Le sucre non réducteur conforme à la présente invention désigne un saccharide constitué de plusieurs motifs saccharidiques dont le carbone 1 porteur du groupe OH hémiacétalique est engagé dans une liaison. Un sucre non réducteur au sens de l'invention ne présente aucune action réductrice sur les solutions cupro-alcalines.

Le sucre non réducteur de la composition d'encollage conforme à la présente invention est un oligoholoside non réducteur renfermant au plus 10 motifs saccharidiques.

A titre d'exemples de tels sucres non réducteurs, on peut citer les diholosides tels que le tréhalose, les isotréhaloses, le saccharose, et les isosaccharoses (« isosucroses » en anglais); les triholosides tels que le mélézitose, le gentianose, le raffinose, l'erlose et l'umbelliférose; les tétraholosides tels que le stachyose; et les pentaholosides tels que le verbascose.

On préfère le saccharose et le tréhalose, et mieux encore le saccharose.

Dans un mode de réalisation préféré, la composition d'encollage est exempte de sucres hydrogénés. Par « sucre hydrogéné », on entend l'ensemble des produits résultant de la réduction, de quelque manière que ce soit, d'un sucre choisi parmi les monosaccharides, les oligosaccharides, les polysaccharides linéaires, ramifiés ou cycliques, les mélanges de ces produits.

Dans un mode réalisation préféré, la composition d'encollage est exempte de formaldéhyde, permettant ainsi de disposer d'une alternative aux compositions d'encollage à base de résols, comme expliqué ci-dessus. On entend par « exempte de formaldéhyde » dans la présente demande, une quantité de formaldéhyde inférieure à 2000 ppm dans une composition d'encollage selon l'invention.

La composition d'encollage est une composition aqueuse qui présente une teneur en matières sèches comprise entre 0,5% et 50% en poids, de préférence entre 2% et 30% en poids, et plus préférentiellement entre 4% et 25% en poids ; la résine furanique et le sucre réducteur et/ou le sucre non réducteur représentent ensemble avantageusement au moins 50% en poids, de préférence au moins 75% en poids des matières sèches de la composition d'encollage.

La composition d'encollage conforme à l'invention peut comprendre en outre des additifs ci-après dans les proportions suivantes calculées sur la base de 100 parts en poids de sucre réducteur et/ou de sucre non réducteur et de résine furanique:

- 0 à 5 parts de silane, en particulier aminosilane ou epoxysilane,
- 0 à 25 parts d'huile, de préférence 4 à 20 parts
- 0 à 10 parts d'un agent hydrophobe, en particulier un silicone, et

- 0 à 30 parts d'urée, de préférence de 0 à 20 parts.

Ces additifs sont normalement ajoutés au moment de la dilution de la composition, mais rien n'interdit en principe de les ajouter déjà à la composition concentrée qu'il suffira ensuite de diluer simplement avec de l'eau.

Le rôle des additifs est connu et brièvement rappelé : le silane est un agent de couplage entre les fibres et le liant, et joue également le rôle d'agent anti-vieillissement; les huiles et en particulier les huiles minérales sont des agents anti-poussière, les silicones sont des agents hydrophobes; l'urée joue le rôle de plastifiant et permet d'éviter la pré-gélification de la composition d'encollage.

De 0 à 20 parts de polyol peut être également ajouté à la composition d'encollage en tant qu'additif, ledit polyol peut être dans ce cas choisi parmi le glycérol, un glycol tel que l'éthylène glycol, le propylène glycol, le butylène glycol et les poly(alkylène) glycols à base de ces glycols, ou les homopolymères et copolymères d'alcool vinylique. Lesdits polyols peuvent jouer également le rôle de plastifiant et permettent d'éviter la pré-gélification de la composition d'encollage.

Les additifs représentent avantageusement au moins 5% en poids, de préférence au moins 10% en poids des matières sèches de la composition d'encollage.

Le pH de la composition aqueuse d'encollage selon l'invention peut être compris entre 3,0 et 10,0, de préférence entre 4,0 et 9,0, en particulier entre 4,5 et 8,5 et idéalement entre 5,0 et 7,0.

Le pH de la composition aqueuse d'encollage peut être ajusté, par simple ajout d'une base organique par exemple par ajout d'une solution aqueuse d'ammoniaque ($NH_4OH$) ou d'une amine, par exemple d'une amine primaire ou secondaire. On utilise de préférence de l'ammoniaque et/ou des amines primaire ou secondaire. Dans un mode de réalisation intéressant, l'amine est une polyamine comportant de préférence de 2 à 5 fonctions amine primaire/secondaire, ou un polymère aminé tel que la polyéthylèneimine.

La Demanderesse a été surprise de constater que l'ajout d'une telle base dans la composition d'encollage n'avait pas d'influence sur la vitesse de réticulation de la résine furanique avec le sucre réducteur et/ou le sucre non-réducteur et ne modifiait pas les propriétés mécaniques de ladite composition. Une augmentation de pH permet toutefois de ralentir, voire d'arrêter l'augmentation de la viscosité et de transporter la résine (formée de résine furanique et d'au moins un sucre réducteur et/ou un sucre non-réducteur) sous forme concentré à température ambiante puis de la conserver pendant plusieurs semaines dans un environnement non réfrigéré.

La viscosité de la solution peut varier entre de larges limites. La viscosité Brookfield des solutions de résine furanique et de sucre réducteur et/ou de sucre non-réducteur est mesurée à 25°C à l'aide d'un viscosimètre Brookfield (selon la méthode décrite dans la norme ASTM D2983), après ajustement de la teneur en matières sèches, par élimination ou ajout d'eau, jusqu'à 50% en poids, de préférence jusqu'à 30% en poids. Dans ces conditions elle est de préférence comprise entre 1 et 1000 mPa.s, plus préférentiellement entre 2 et 500 mPa.s, en particulier entre 3 et 100 mPa.s.

L'aptitude à la dilution, ou « diluabilité », d'une solution de résine concentrée est définie comme étant le volume d'eau déionisée qu'il est possible, à une température donnée, d'ajouter à une unité de volume de la solution aqueuse de résine avant l'apparition d'un trouble permanent. On considère généralement qu'une résine est apte à être utilisée en tant qu'encollage lorsque sa diluabilité est égale ou supérieure à 1000%, à 20°C.

La solution aqueuse de résine furanique et de sucre réducteur et/ou de sucre non réducteur présente avantageusement une diluabilité supérieure à 1000%, de préférence supérieure à 2000%.

Dans un mode de réalisation préféré, et comme expliqué précédemment, la composition d'encollage est exempte de base et/ou d'acide tel qu'un acide organique polycarboxylique, ou un sel métallique d'acide inorganique, ou un sel d'ammonium d'acide inorganique, ou un acide hypophosphoreux, ou l'acide phosphorique. En effet, il a été constaté de manière surprenante par les inventeurs qu'un sucre réducteur et/ou un sucre non réducteur n'avait pas besoin d'acide pour réagir avec la résine furanique dans la composition d'encollage selon l'invention.

L'invention a également pour objet un procédé de fabrication d'un produit d'isolation à base de fibres minérales ou organiques liées par un liant organique, comprenant les étapes suivantes :

(a) l'application d'une composition d'encollage telle que décrite ci-avant sur des fibres minérales ou organiques,
(b) la formation d'un assemblage de fibres minérales ou organiques,
(c) le chauffage de l'assemblage de fibres minérales ou organiques jusqu'à durcissement de ladite composition d'encollage.

Dans un mode de réalisation préféré du procédé de l'invention, l'étape (a) d'application de la solution d'encollage sur les fibres minérales ou organiques peut être réalisée par pulvérisation au moyen de buses de pulvérisation. L'application de la composition d'encollage précède de préférence l'étape (b) d'assemblage, pendant laquelle les fibres encollées sont rassemblées, par exemple dans un moule ou sur un convoyeur avant d'être chauffées de manière consécutive ou extemporanée pour réticuler et durcir le liant.

La composition d'encollage selon l'invention peut être utilisée pour lier des fibres minérales ou organiques, de préférences des fibres minérales, et encore plus préférentiellement de la laine minérale.

Les fibres organiques peuvent être des fibres naturelles, artificielles (c'est-à-dire des fibres naturelles ayant subi une modification chimique) ou synthétiques.

Les fibres minérales sont en particulier des fibres de verre, notamment de verre E, C, R ou AR (alcali-résistant), ou des fibres de roche, notamment de basalte (ou wollastonite). Ces fibres peuvent être des fibres renfermant plus de 96 % en poids de silice et des fibres de céramique à base d'au moins un oxyde, un nitrure ou d'un carbure de métal ou de métalloïde, ou d'un mélange de ces composés, en particulier d'au moins un oxyde, un nitrure ou un carbure d'aluminium, de zirconium, de titane, de bore ou d'yttrium. Et plus particulièrement, les fibres minérales selon l'invention sont des fibres de verre aluminosilicate, notamment des fibres de verre aluminosilicate comprenant de l'oxyde d'aluminium, $Al_2O_3$, en une fraction massique comprise entre 14% et 28%.

Les fibres peuvent être assemblées,

- en matelas souples, par exemple en matelas de laine minérale tels que des matelas en laine de verre ou en laine de roche, enroulables et compressibles ou pliables,
- en plaques ou panneaux de fibres, plus denses et rigides que les matelas enroulables,
- en produits moulés à base de fibres, par exemple des doublures de conduits ou de canalisations,
- en textiles tissés ou non-tissés, tels que des mats non-tissés de fibres de verre ou organiques.

L'étape (c) de chauffage de l'assemblage de fibres est mise en œuvre de préférence à une température comprise entre 100°C et 250°C pendant une durée comprise entre 1 minute et 10 minutes, de préférence dans une enceinte thermo-régulée, telle qu'une étuve à air forcé dans laquelle on introduit dans un ou plusieurs compartiments des gaz chauds de température contrôlée, une étuve à microondes, ou un moule chauffant à circulation de fluide ou résistance chauffante.

Dans un mode de réalisation préféré du procédé selon l'invention, les fibres sont des fibres minérales et l'assemblage de fibres minérales présente, après l'étape (c) de durcissement, une perte par combustion (LOI, de l'anglais *loss on ignition*) comprise entre 1% et 20%, de préférence entre 1% et 7% en poids.

L'invention concerne également un produit isolant, notamment un produit d'isolation acoustique et/ou thermique à base de fibres minérales ou organiques liées par un liant organique, obtenu par un procédé tel que décrit ci-dessus. Le produit isolant obtenu comprend alors des fibres minérales ou organiques et un liant obtenu par durcissement d'une composition d'encollage comprenant une solution aqueuse de résine furanique et de sucre réducteur et/ou de sucre non-réducteur (telle que décrite ci-dessus). Le produit isolant selon l'invention présente une résistance à la traction et une reprise d'épaisseur après compression équivalentes à celles d'un produit isolant obtenu selon l'état de la technique, c'est-à-dire équivalentes à un produit isolant comprenant des fibres minérales ou organiques et un liant obtenu par durcissement d'une composition d'encollage comprenant une résine furanique seule (sans sucre(s)).

De préférence, les produits à base de fibres minérales ou organiques selon l'invention sont des produits à base de laines minérales qui peuvent être également utilisés dans la culture hors sols.

**Exemples**

Exemple 1 :

On prépare des compositions aqueuses d'encollage comprenant comme résine furanique, une résine d'alcool furfurylique, appelée poly(alcool furfurylique) (BioRez™ (TransFurans Chemicals, Belgique)) avec du glucose (D-(+)-Glucose ≥ 99,5 % de Sigma Aldrich). Les compositions aqueuses d'encollage ci-dessous présentent une teneur en matières sèches de 20% en poids. On fait varier la quantité c.-à-d. le pourcentage en poids du poly(alcool furfurylique) ainsi que celui du glucose, par rapport au poids total sec de la composition, avec un pas de 10% comme indiqué dans le tableau 1.

[Table 1]

| Nom de l'échantillon | Pourcentage de poly(alcool furfurylique) | Pourcentage de glucose |
|---|---|---|
| PFA_G_1 | 100 | 0 |
| PFA_G_2 | 90 | 10 |
| PFA_G_3 | 80 | 20 |
| PFA_G_4 | 70 | 30 |
| PFA_G_5 | 60 | 40 |
| PFA_G_6 | 50 | 50 |
| PFA_G_7 | 40 | 60 |

(suite)

| Nom de l'échantillon | Pourcentage de poly(alcool furfurylique) | Pourcentage de glucose |
|---|---|---|
| PFA_G_8 | 30 | 70 |
| PFA_G_9 | 20 | 80 |
| PFA_G_10 | 10 | 90 |
| PFA_G_11 | 0 | 100 |

On imprègne deux séries de toiles de verre respectivement avec ces compositions aqueuses d'encollage, puis les toiles sont passées sur un dispositif d'aspiration permettant d'éliminer le surplus de solution. On fait ensuite durcir les toiles de verre imprégnées dans une étuve thermostatée à 220°C. Après 90 secondes et 120 secondes de cuisson, on soumet un échantillon à une détermination de la résistance à la rupture en traction. Pour cela les toiles sont découpées en bandes (300 mm x 50 mm) et leurs extrémités sont insérées dans les mâchoires d'une machine de traction. La machine de traction utilisée est une MTS, la cellule de force est de 2 kN et les mâchoires utilisent un serrage pneumatique.

Le tableau 2 montre la force maximale atteinte en traction pour deux durées de cuisson (90 secondes et 120 secondes) à une température de 220°C des toiles de fibres de verre imprégnées avec une composition d'encollage selon le tableau 1.

[Table 2]

| Nom de l'échantillon | Temps de cuisson | Force maximale en traction (N) |
|---|---|---|
| PFA_G_1 | 90 s | 96, 7 |
| PFA_G_1 | 120 s | 92,9 |
| PFA_G_2 | 90 s | 98,3 |
| PFA_G_2 | 120 s | 92,7 |
| PFA_G_3 | 90 s | 92,8 |
| PFA_G_3 | 120 s | 93,4 |
| PFA_G_4 | 90 s | 91,8 |
| PFA_G_4 | 120 s | 89,0 |
| PFA_G_5 | 90 s | 83,6 |
| PFA_G_5 | 120 s | 85,8 |
| PFA_G_6 | 90 s | 76,6 |
| PFA_G_6 | 120 s | 82,5 |
| PFA_G_7 | 90 s | 75,8 |
| PFA_G_7 | 120 s | 72,0 |
| PFA_G_8 | 90 s | 66,6 |
| PFA_G_8 | 120 s | 62,3 |
| PFA_G_9 | 90 s | 48,2 |
| PFA_G_9 | 120 s | 54,6 |
| PFA_G_10 | 90 s | Trop faible pour être mesuré |
| PFA_G_10 | 120 s | 26,8 |
| PFA_G_11 | 90 s | Trop faible pour être mesuré |
| PFA_G_11 | 120 s | Trop faible pour être mesuré |

On peut constater que les échantillons préparés selon l'invention (PFA_G_2 à PFA_G_7) comprenant de 10% à 60% en poids de glucose présentent des résistances en traction satisfaisantes comparées à celle de l'échantillon de référence qui comprend 100% en poids de poly(alcool furfurylique). En revanche, les propriétés mécaniques en tractions des échantillons (PFA_G_8 à PFA_G_11) comprenant de 70% à 100% en poids de glucose décroissent et deviennent même très faibles puisque des mesures ne peuvent pas être effectuées sur les échantillons comprenant respectivement 90% et 100% de glucose (PFA_G_10 et PFA_G_11).

Exemple 2 :

On prépare des compositions aqueuses d'encollage comprenant 60% en poids de poly(alcool furfurylique) comme résine furanique ((BioRez™ (TransFurans Chemicals, Belgique)) et 40% en poids de différents sucres, par rapport au poids total sec de la composition :

- les sucre réducteurs tels que le fructose (D-(-)-fructose de Sigma Aldrich) et la maltodextrine ((DE 16,5-19,5) Maldex®Tereos Syral),
- le sucre non-réducteur tel que le saccharose (D(+)-Saccharose de Sigma Aldrich) et
- le sucre hydrogéné tel que le sorbitol (D-sorbitol de Sigma Aldrich).

Les compositions aqueuses d'encollage ci-dessous présentent une teneur en matières sèches de 20% en poids. La description des solutions est présentée dans le tableau 3.

[Table 3]

| Nom de l'échantillon | Sucre utilisé | Pourcentage de poly(alcool furfurylique) | Pourcentage de sucre utilisé |
|---|---|---|---|
| PFA_S_1 | fructose | 60 | 40 |
| PFA_S_2 | maltodextrine (DE 16,5-19,5) | 60 | 40 |
| PFA_S_3 | saccharose | 60 | 40 |
| PFA_S_4 | sorbitol | 60 | 40 |

Le tableau 4 ci-dessous montre la force maximale atteinte en traction (mesurée selon la méthode décrite à l'exemple 1) pour deux durées de cuisson à une température de 220°C des toiles de fibres de verre imprégnées (comme celles décrites dans l'exemple 1) avec une composition d'encollage selon le tableau 3.

[Table 4]

| | Temps de cuisson | Force maximale en traction (N) |
|---|---|---|
| PFA_S_1 | 90 s | 87,7 |
| PFA_S_1 | 120 s | 85,2 |
| PFA_S_2 | 90 s | 108,4 |
| PFA_S_2 | 120 s | 111,7 |
| PFA_S_3 | 90 s | 91,8 |
| PFA_S_3 | 120 s | 92,5 |
| PFA_S_4 | 120 s | 50,1 |
| PFA_S_4 | 300 s | 67,1 |

On constate que les échantillons préparés selon l'invention avec du fructose, de la maltodextrine et du saccharose présentent des résistances en traction satisfaisantes. En revanche l'utilisation de sorbitol fait décroitre fortement les propriétés mécaniques en traction de la composition d'encollage, même avec un temps de cuisson supérieur (de 300 secondes).

Exemple 3 :

On prépare des compositions aqueuses d'encollage comprenant les constituants figurant dans le tableau 5 exprimé en parts pondérales (en pourcentage en poids par rapport au poids total sec de la composition).

[Table 5]

| Nom de l'échantillon | Sucre réducteur utilisé | Pourcentage de: poly(alcool furfurylique)[1] (résine furanique) | Pourcentage de sucre utilisé |
|---|---|---|---|
| PFA_P_1 | - | 100 | 0 |
| PFA_P_2 | glucose[2] | 80 | 20 |
| PFA_P_3 | glucose[2] | 60 | 40 |
| [1] BioRez™ (TransFurans Chemicals, Belgique) [2] D-glucose hydraté | | | |

Les compositions d'encollage sont préparées en introduisant les constituants dans un récipient contenant de l'eau, sous une agitation vigoureuse. Les compositions d'encollage ci-dessous présentent une teneur en matières sèches de 5% en poids.

Les compositions d'encollage sont utilisées pour former des produits d'isolation à base de laine de verre.

On fabrique de la laine de verre par la technique de la centrifugation interne dans laquelle la composition de verre fondu est transformée en fibres au moyen d'un outil dénommé assiette de centrifugation, comprenant un panier formant la chambre de réception de la composition fondue et une bande périphérique percée d'une multitude d'orifices : l'assiette est mue en rotation autour de son axe de symétrie disposé verticalement, la composition est éjectée à travers les orifices sous l'effet de la force centrifuge et la matière s'échappant des orifices est étirée en fibres avec l'assistance d'un courant de gaz d'étirage. La finesse des fibres de verre, mesurée par la valeur de leur micronaire dans les conditions décrites dans la demande de brevet FR 2 840071, est égale à 15,8 l/min. Il existe une relation de correspondance entre la valeur micronaire et le diamètre moyen des fibres.

De façon classique, une couronne de pulvérisation d'encollage est disposée au-dessous de l'assiette de fibrage de façon à répartir régulièrement la composition d'encollage sur la laine de verre venant d'être formée.

La laine minérale ainsi encollée est collectée sur un convoyeur à bande ayant une largeur de 2,40 m, équipé de caissons d'aspiration internes qui retiennent la laine minérale sous forme d'un feutre ou d'une nappe à la surface du convoyeur. Le convoyeur circule ensuite dans une étuve maintenue à 240°C où les constituants de l'encollage polymérisent pour former un liant. Le produit isolant obtenu présente une masse volumique égale à 17,5 kg/m³, une épaisseur d'environ 80 mm immédiatement après la fabrication et une perte au feu égale à 4,7%.

Dans cet exemple, on mesure la résistance en traction, selon la norme ASTM C 686-71T, sur un échantillon découpé par estampage dans le produit isolant. L'échantillon a la forme d'un tore de 122 mm de longueur, 46 mm de largeur, un rayon de courbure de la découpe du bord extérieur égal à 38 mm et un rayon de courbure de la découpe du bord intérieur égal à 12,5 mm.

L'échantillon est disposé entre deux mandrins cylindriques d'une machine d'essais dont l'un est mobile et se déplace à vitesse constante. On mesure la force de rupture F de l'échantillon et on calcule la résistance en traction RT, définie par le rapport de la force de rupture F (en Newton) à la masse de l'échantillon (en Newton/gramme).

La résistance en traction est mesurée immédiatement après la fabrication (résistance en traction initiale).

La « reprise d'épaisseur » indique l'élasticité en compression du produit final. Pour la mesurer on applique, pendant un temps donné, une pression de compression telle que l'épaisseur soit réduite à 1/4,8 de sa valeur initiale. Après relâchement de cette pression de compression, on mesure de nouveau l'épaisseur. La reprise d'épaisseur est le rapport de l'épaisseur mesurée après relâchement de la pression de compression à l'épaisseur initiale.

Les propriétés des produits d'isolation sont données dans le tableau

[Table 6]

| Nom de l'échantillon | Résistance en traction (N/g) | Reprise d'épaisseur (cm) |
|---|---|---|
| PFA_P_1 | 4,09 | 107,95 |
| PFA_P_2 | 4,36 | 108,55 |
| PFA_P_3 | 3,53 | 110,31 |

On peut constater que les produits isolants préparé conformément à l'invention (PFA_P_2 et PFA_P_3) présente une résistance en traction et une reprise d'épaisseur équivalentes à celles de l'échantillon de référence (PFA_P_1).

Exemple 4

On procède de la manière décrite à l'exemple 3 mais en utilisant, en tant que sucre réducteur : le dextrose. Les tableaux 7 et 8 spécifient les fractions pondérales des compositions d'encollage utilisées et les propriétés mécaniques des échantillons de laine minérale obtenus.

[Table 7]

| Nom de l'échantillon | Sucre réducteur utilisé | Pourcentage de: poly(alcool furfurylique)[1] (résine furanique) | Pourcentage de sucre utilisé |
|---|---|---|---|
| PFA_P_4 | - | 100 | 0 |
| PFA_P_5 | dextrose[2] | 60 | 40 |
| [1]BioRez™ (TransFurans Chemicals, Belgique) [2]dextrose monohydrate de Roquette | | | |

[Table 8]

| Nom de l'échantillon | Résistance en traction (N/g) | Reprise d'épaisseur (cm) |
|---|---|---|
| PFA_P_4 | 4,45 | 105,66 |
| PFA_P_5 | 4,06 | 108,11 |

On peut constater que le produit isolant préparé conformément à l'invention (PFA_P_5) présente une résistance en traction et une reprise d'épaisseur équivalente à celle de l'échantillon de référence (PFA_P_4).

**Revendications**

1.  Composition aqueuse d'encollage pour des fibres minérales ou organiques comprenant :

    - de 40% à 95% en poids de résine furanique, et
    - de 5% à 60% en poids d'au moins un sucre réducteur et/ou d'au moins un sucre non réducteur,
    par rapport au poids total sec de la composition,
    ladite composition d'encollage présentant une teneur en matières sèches comprise entre 0,5% et 50% en poids.

2.  Composition d'encollage selon la revendication 1, **caractérisé en ce que** la résine furanique est une résine d'alcool furfurylique, appelée poly(alcool furfurylique).

3.  Composition d'encollage selon la revendication 1 ou 2, **caractérisée par le fait qu'**elle comprend de 10% à 50% en poids d'au moins un sucre réducteur et/ou d'au moins un sucre non-réducteur et de préférence de 20% à 40% en poids, et plus préférentiellement de 20% à 30% en poids par rapport au poids total sec de la composition.

4.  Composition d'encollage selon l'une quelconque des revendications précédentes 1 à 3, **caractérisée en ce que** le sucre réducteur est le glucose, le galactose, le mannose, le fructose, le lactose, le maltose, l'isomaltose, le cellobiose ou une dextrine, de préférence le glucose et le maltose, et avantageusement le glucose.

5.  Composition d'encollage selon la revendication 4, **caractérisée en ce que** la dextrine présente un équivalent en dextrose (DE) supérieur à 5, de préférence supérieur à 30, et plus préférentiellement supérieur à 50.

6.  Composition d'encollage selon l'une quelconque des revendications précédentes 1 à 3, **caractérisée en ce que** le sucre non réducteur est le tréhalose, un isotréhalose, le saccharose, un isosaccharose, le mélézitose, le gentianose, le raffinose, l'erlose, l'umbelliférose, le stachyose ou le verbascose, de préférence le saccharose et le tréhalose, et avantageusement le saccharose.

7.  Composition d'encollage selon l'une quelconque des revendications précédentes, **caractérisée par le fait qu'**elle est exempte de sucres hydrogénés.

**8.** Composition d'encollage selon la revendication 1, **caractérisée par le fait qu'**elle présente une teneur en matières sèches comprise entre 2% et 30% en poids, de préférence entre 4% et 25% en poids ; la résine furanique et le sucre réducteur et/ou le sucre non réducteur représentant ensemble avantageusement au moins 50% en poids, de préférence au moins 75% en poids des matières sèches de la composition d'encollage.

**9.** Composition d'encollage selon l'une quelconque des revendications précédentes, **caractérisée par le fait qu'**elle présente un pH compris entre 3,0 et 10,0, de préférence entre 4,0 et 9,0, en particulier entre 4,5 et 8,5 et idéalement entre 5,0 et 7,0.

**10.** Composition d'encollage selon l'une quelconque des revendications précédentes, **caractérisée en ce qu'**elle comprend en outre les additifs ci-après dans les proportions suivantes calculées sur la base de 100 parts en poids de sucre réducteur et/ou de sucre non réducteur et de résine furanique:

- 0 à 5 parts de silane, en particulier aminosilane ou un epoxysilane,
- 0 à 25 parts d'huile, de préférence 4 à 20 parts,
- 0 à 10 parts d'un agent hydrophobe, en particulier un silicone, et
- 0 à 30 parts d'urée, de préférence de 0 à 20 parts.

**11.** Procédé de fabrication d'un produit d'isolation à base de fibres minérales ou organiques liées par un liant organique, comprenant les étapes suivantes :

(a) l'application d'une composition d'encollage selon l'une quelconque des revendications précédentes sur des fibres minérales ou organiques,
(b) la formation d'un assemblage de fibres minérales ou organiques,
(c) le chauffage de l'assemblage de fibres minérales ou organiques jusqu'à durcissement de ladite composition d'encollage.

**12.** Procédé selon la revendication précédente, tel que l'application de ladite composition d'encollage de l'étape a) sur les fibres minérales ou organiques se fait par pulvérisation au moyen de buses de pulvérisations.

**13.** Procédé selon l'une quelconque des revendications 11 ou 12, **caractérisé par le fait que** l'assemblage de fibres minérales ou organiques est un matelas de fibres, une plaque ou un panneau de fibres, un produit moulé à base de fibres, ou un textile tissé ou non-tissé.

**14.** Procédé selon l'une quelconque des revendications 11 à 13, **caractérisé par le fait que** l'étape (c) comprend le chauffage dudit assemblage de fibres à une température comprise entre 100°C et 250°C pendant une durée comprise entre 1 et 10 minutes, de préférence dans une enceinte thermo-régulée.

**15.** Procédé selon l'une quelconque des revendications 11 à 14, **caractérisé par le fait que** les fibres sont des fibres minérales et que l'assemblage de fibres minérales présente, après l'étape (c) de durcissement, une perte par combustion (LOI) comprise entre 1% et 20%, de préférence entre 1% et 7% en poids.

**16.** Produit isolant à base de fibres minérales ou organiques liées par un liant organique, obtenu par un procédé selon l'une quelconque des revendications 11 à 15.


**Patentansprüche**

**1.** Wässrige Klebezusammensetzung für mineralische oder organische Fasern, umfassend:

- zu 40 Gew.-% bis 95 Gew.-% Furanharz und
- zu 5 Gew.-% bis 60 Gew.-% mindestens einen reduzierenden Zucker und/oder mindestens einen nicht reduzierenden Zucker,
relativ zu dem Gesamttrockengewicht der Zusammensetzung, wobei die Klebezusammensetzung einen Trockenmassegehalt, der zwischen 0,5 Gew.-% und 50 Gew.-% liegt, aufweist,

**2.** Klebezusammensetzung nach Anspruch 1,
**dadurch gekennzeichnet, dass** das Furanharz ein Harz aus Furfurylalkohol, genannt Poly(furfurylalkohol), ist.

3. Klebezusammensetzung nach Anspruch 1 oder 2,
**dadurch gekennzeichnet, dass** sie von zu 10 Gew.-% bis 50 Gew.-% mindestens einen reduzierenden Zucker und/oder mindestens einen nicht reduzierenden Zucker und vorzugsweise von zu 20 Gew.-% bis 40 Gew.-% und mehr bevorzugt von zu 20 Gew.-% bis 30 Gew.-% relativ zu dem Gesamttrockengewicht der Zusammensetzung umfasst.

4. Klebezusammensetzung nach einem der vorstehenden Ansprüche 1 bis 3, **dadurch gekennzeichnet, dass** der reduzierende Zucker Glucose, Galactose, Mannose, Fructose, Lactose, Maltose, Risomaltose, Cellobiose oder ein Dextrin, vorzugsweise Glucose und Maltose und vorteilhafterweise Glucose, ist.

5. Klebezusammensetzung nach Anspruch 4,
**dadurch gekennzeichnet, dass** das Dextrin ein Dextroseäquivalent (DE) von größer als 5, vorzugsweise größer als 30 und mehr bevorzugt größer als 50 aufweist.

6. Klebezusammensetzung nach einem der vorstehenden Ansprüche 1 bis 3, **dadurch gekennzeichnet, dass** der nicht reduzierende Zucker Trehalose, Isotrehalose, Saccharose, Isosaccharose, Melezitose, Gentianose, Raffinose, Ferlose, Umbelliferose, Stachyose oder Verbascose, vorzugsweise Saccharose und Trehalose und vorteilhafterweise Saccharose ist.

7. Klebezusammensetzung nach einem der vorstehenden Ansprüche, **dadurch gekennzeichnet, dass** es frei von hydrierten Zuckern ist.

8. Klebezusammensetzung nach Anspruch 1,
**dadurch gekennzeichnet, dass** sie einen Trockenmassegehalt, der zwischen 2 Gew.-% und 30 Gew.-%, vorzugsweise zwischen 4 Gew.-% und 25 Gew.-% liegt, aufweist, wobei das Furanharz und der reduzierende Zucker und/oder der nicht reduzierende Zucker zusammen vorteilhafterweise mindestens 50 Gew.-%, vorzugsweise mindestens 75 Gew.-% der Trockenmasse der Klebezusammensetzung ausmachen.

9. Klebezusammensetzung nach einem der vorstehenden Ansprüche, **dadurch gekennzeichnet, dass** sie einen pH-Wert, der zwischen 3,0 und 10,0, vorzugsweise zwischen 4,0 und 9,0, insbesondere zwischen 4,5 und 8,5 und idealerweise zwischen 5,0 und 7,0 liegt, aufweist.

10. Klebezusammensetzung nach einem der vorstehenden Ansprüche, **dadurch gekennzeichnet, dass** sie ferner die nachfolgenden Zusatzstoffe in den folgenden Anteilen, berechnet auf der Basis von 100 Gewichtsteilen reduzierendem Zucker und/oder nicht reduzierendem Zucker und Furanharz, umfasst:

   - zu 0 bis 5 Teilen Silan, insbesondere Aminosilan oder Epoxysilan,
   - zu 0 bis 25 Teilen Öl, vorzugsweise zu 4 bis 20 Teilen,
   - zu 0 bis 10 Teilen ein hydrophobes Mittel, insbesondere ein Silikon, und
   - zu 0 bis 30 Teilen Harnstoff, vorzugsweise zu 0 bis 20 Teilen.

11. Verfahren zum Herstellen eines Isolierprodukts auf Basis von mineralischen oder organischen Fasern, die durch ein organisches Bindemittel gebunden sind, umfassend die folgenden Schritte: (a) Aufbringen einer Klebezusammensetzung nach einem der vorstehenden Ansprüche auf mineralische oder organische Fasern, (b) Ausbilden einer Anordnung aus mineralischen oder organischen Fasern, (c) Erhitzen der Anordnung aus mineralischen oder organischen Fasern, bis zum Aushärten der Klebezusammensetzung.

12. Verfahren nach einem der vorstehenden Ansprüche, wobei das Aufbringen der Klebezusammensetzung von Schritt a) auf die mineralischen oder organischen Fasern durch Sprühen mittels Sprühdüsen erfolgt.

13. Verfahren nach einem der Ansprüche 11 oder 12,
**dadurch gekennzeichnet, dass** die Anordnung aus mineralischen oder organischen Fasern ein Vlies, eine Faserplatte oder ein Faserpaneel, ein geformtes Produkt auf Faserbasis oder ein gewebtes oder nicht gewebtes Textil ist.

14. Verfahren nach einem der Ansprüche 11 bis 13,
**dadurch gekennzeichnet, dass** der Schritt (c) das Erhitzen der Anordnung aus Fasern auf eine Temperatur, die zwischen 100 °C und 250 °C liegt, während einer Dauer, die zwischen 1 Minute und 10 Minuten liegt, vorzugsweise in einem temperaturgeregelten abgeschlossenen Raum, umfasst.

**15.** Verfahren nach einem der Ansprüche 11 bis 14, **dadurch gekennzeichnet, dass** die Fasern mineralische Fasern sind und die Anordnung aus mineralischen Fasern nach dem Aushärtungsschritt (c) einen Verbrennungsverlust (LOI), der zwischen 1 Gew.-% und 20 Gew.-%, vorzugsweise zwischen 1 Gew.-% und 7 Gew.-%, liegt, aufweist.

**16.** Isolierprodukt auf der Basis von mineralischen oder organischen Fasern, die durch ein organisches Bindemittel gebunden sind, das durch ein Verfahren nach einem der Ansprüche 11 bis 15 erhalten wird.

**Claims**

**1.** Aqueous binding composition for mineral or organic fibres comprising:

   - from 40 to 95 wt% of furan resin, and
   - from 5 to 60 wt% of at least one reducing sugar and/or of at least one non-reducing sugar,
   relative to the total dry weight of the composition,
   said binding composition having a dry matter content between 0.5 to 50 wt%.

**2.** Binding composition according to Claim 1, **characterized in that** the furan resin is a furfuryl alcohol resin, called poly(furfuryl alcohol).

**3.** Binding composition according to Claim 1 or 2, **characterized in that** it comprises from 10 to 50 wt% of at least one reducing sugar and/or of at least one non-reducing sugar and preferably from 20 to 40 wt%, and more preferably from 20 to 30 wt% relative to the total dry weight of the composition.

**4.** Binding composition according to any one of the preceding Claims 1 to 3, **characterized in that** the reducing sugar is glucose, galactose, mannose, fructose, lactose, maltose, isomaltose, cellobiose or a dextrin, preferably glucose and maltose, and advantageously glucose.

**5.** Binding composition according to Claim 4, **characterized in that** the dextrin has a dextrose equivalent (DE) above 5, preferably above 30, and more preferably above 50.

**6.** Binding composition according to any one of the preceding Claims 1 to 3, **characterized in that** the non-reducing sugar is trehalose, an isotrehalose, sucrose, an isosucrose, melezitose, gentianose, raffinose, erlose, umbelliferose, stachyose or verbascose, preferably sucrose and trehalose, and advantageously sucrose.

**7.** Binding composition according to any one of the preceding claims, **characterized in that** it is free from hydrogenated sugars.

**8.** Binding composition according to claim 1, **characterized in that** it has a dry matter content between 2 and 30 wt%, preferably between 4 and 25 wt%; the furan resin and the reducing sugar and/or non-reducing sugar together advantageously representing at least 50 wt%, preferably at least 75 wt% of the dry matter of the binding composition.

**9.** Binding composition according to any one of the preceding claims, **characterized in that** it has a pH between 3.0 and 10.0, preferably between 4.0 and 9.0, in particular between 4.5 and 8.5 and ideally between 5.0 and 7.0.

**10.** Binding composition according to any one of the preceding claims, **characterized in that** it further comprises the additives given hereunder in the following proportions calculated on the basis of 100 parts by weight of reducing sugar and/or of non-reducing sugar and of furan resin:

   - 0 to 5 parts of silane, in particular aminosilane or an epoxysilane,
   - 0 to 25 parts of oil, preferably 4 to 20 parts,
   - 0 to 10 parts of a hydrophobic agent, in particular a silicone, and
   - 0 to 30 parts of urea, preferably from 0 to 20 parts.

**11.** Method for making an insulation product based on mineral or organic fibres bound with an organic binder, comprising the following steps:

(a) applying a binding composition according to any one of the preceding claims on mineral or organic fibres,
(b) forming an assembly of mineral or organic fibres,
(c) heating the assembly of mineral or organic fibres until said binding composition hardens.

12. Method according to the preceding claim, such that said binding composition in step a) is applied on the mineral or organic fibres by spraying by means of spraying nozzles.

13. Method according to either one of Claims 11 or 12, **characterized in that** the assembly of mineral or organic fibres is a blanket of fibres, a board or a panel of fibres, a fibre-based moulded product, or a woven or non-woven textile.

14. Method according to any one of Claims 11 to 13, **characterized in that** step (c) comprises heating said assembly of fibres at a temperature between 100°C and 250°C for a time between 1 and 10 minutes, preferably in a temperature-controlled enclosure.

15. Method according to any one of claims 11 to 14, **characterized in that** the fibres are mineral fibres and the assembly of mineral fibres has, after the curing step (c), a loss on ignition (LOI) between 1 and 20 wt%, preferably between 1 and 7 wt%.

16. Insulating product based on mineral or organic fibres bound with an organic binder, obtained by a method according to any one of Claims 11 to 15.

## RÉFÉRENCES CITÉES DANS LA DESCRIPTION

### Documents brevets cités dans la description

- FR 3019815 A1
- WO 9325490 A
- WO 9426676 A
- WO 9426677 A
- WO 9426798 A
- WO 2018167429 A1
- FR 2840071